Europäisches Patentamt

European Patent Office

Office européen des brevets

(11) Publication number: **0 612 631 A1**

# EUROPEAN PATENT APPLICATION

(21) Application number: **94102407.7**

(22) Date of filing: **17.02.94**

(51) Int. Cl.⁵: **B60C 11/11**, B60C 11/12

(30) Priority: **17.02.93 JP 28001/93**

(43) Date of publication of application:
**31.08.94 Bulletin 94/35**

(84) Designated Contracting States:
**DE ES FR GB IT**

(71) Applicant: **BRIDGESTONE CORPORATION**
**10-1, Kyobashi 1-Chome**
**Chuo-Ku**
**Tokyo 104 (JP)**

(72) Inventor: **Inoue, Kazuhide**
**Bridgestone Corp**
**Tosu Factory**
**1000,Todoroki-machi**
**Tosu-shi Saga-ken 841 (JP)**
Inventor: **Andoh, Toshiaki**
**3-3-4-107, Ogawa-higashi-cho**
**Kodaira-shi, Tokyo (JP)**
Inventor: **Kurokawa, Maki**
**2201-3, Matoba**
**Kawagoe-shi, Saitama-ken (JP)**

(74) Representative: **Görg, Klaus, Dipl.-Ing. et al**
**Hoffmann, Eitle & Partner,**
**Patent- und Rechtsanwälte,**
**Arabellastrasse 4**
**D-81925 München (DE)**

(54) Method of manufacturing a pneumatic tire.

(57) A method of manufacturing a pneumatic tire having at least one of a group of two or more kinds of island-like blocks (26) having mutually different circumferential dimensions and a group of two or more kinds of blocks (24) which are each defined by adjacent lug grooves (20) of a plurality of lug grooves arranged in a circumferential row and have mutually different circumferential dimensions, wherein a slit (30) for lowering rigidity is formed in at least one of each of the island-like blocks (26A) whose circumferential dimensions are relatively large among the island-like blocks and each of the blocks whose circumferential dimensions are relatively large among the blocks defined by the adjacent lug grooves. Hence, the rigidity of large blocks is lowered, and the difference in rigidity between the large blocks and the small blocks is reduced so as to improve the uniformity of the tire.

EP 0 612 631 A1

FIG. 1

BACKGROUND OF THE INVENTION

Field of the Invention:

The present invention relates to a method of manufacturing a pneumatic tire and a pneumatic tire manufactured by that method, and more particularly to a method of manufacturing a pneumatic tire which is provided with two or more kinds of island-like blocks having mutually different circumferential dimensions and/or two or more kinds of blocks which are each defined by adjacent lug grooves of a plurality of lug grooves arranged in a circumferential row and have mutually different circumferential dimensions, so as to improve the uniformity of the tire.

Description of the Related Art:

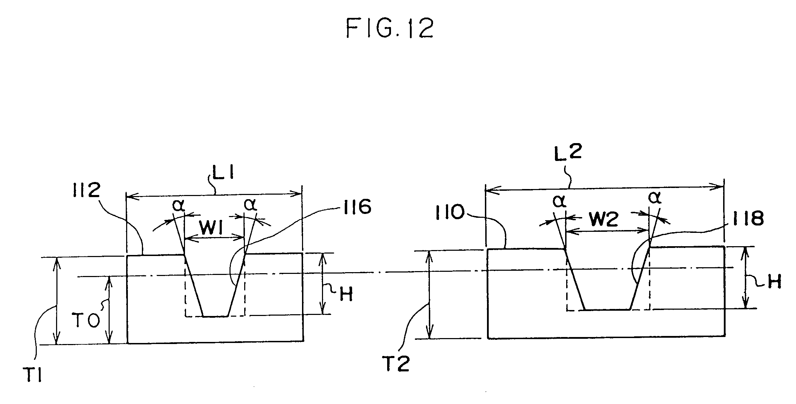

In general, in the design of a tread pattern of a tire, the pitches of the blocks are made irregular so as to minimize the pattern noise which is the most dominant among the kinds of tire noise. According to current design methods, the present situation is such that large and small blocks of various patterns produced by these irregular pitches inevitably result in nonuniformity in the circumferential direction of the top tread gage. At this time, as shown in Fig. 12, the gage difference $\Delta t$ (a gage T2 of a large block portion - a gage T1 of a small block portion) between a large block 110 and a small block 112 is expressed by the following Formula (1) if a negative ratio (a ratio between a groove area and a tread area) is fixed:

$$\Delta t = (1/L1 - l/L2) \times H^2 \times \tan\alpha \qquad \text{Formula (1)}$$

where T1 denotes the tread gage of the small block portion after vulcanization molding; T2 denotes the tread gage of the large block portion after vulcanization molding; L1 denotes a circumferential dimension of the small block 112 (in Fig. 12, L1 indicates the circumferential pitch of the small block 112, but has the same dimension as the circumferential dimension of the small block 112); L2 denotes a circumferential dimension of the large block 110 (in Fig. 12, L2 indicates the circumferential pitch of the large block 110, but has the same dimension as the circumferential dimension of the large block 110); W1 denotes the groove width at the opening of a groove 116 in the small block 112; W2 denotes the groove width at the opening of a groove 118 in the large block 110; H denotes the depth of the groove 116 or the groove 118; $\alpha$ denotes an angle of inclination of the side wall of the groove 116 or the groove 118 with respect to the direction of the groove depth.

Formula (1) above is derived in the following procedure.

As shown in Fig. 12, if the tread gage in a green tire before vulcanisation molding is assumed to be T0, the cross-sectional area AL0 of the large block portion of the tread before vulcanization molding is expressed by the following Formula (2):

$$AL0 = L2 \times T0 \qquad \text{Formula (2)}$$

The cross-sectional area AL1 (which is equal to the cross-sectional area AL0) after this portion is vulcanization-molded is expressed by the following Formula (3):

$$AL1 = T2 \times L2 - (W2 \times H - H^2 \times \tan\alpha) \qquad \text{Formula (3)}$$

Meanwhile, the cross-sectional area AS0 of the small block portion of the tread before vulcanization molding is expressed by the following Formula (4):

$$AS0 = L1 \times T0 \qquad \text{Formula (4)}$$

The cross-sectional area AS1 (which is equal to the cross-sectional area AS0) after this portion is vulcanization-molded is expressed by the following Formula (5):

$$AS1 = T1 \times L1 - (W1 \times H - H^2 \times \tan\alpha) \qquad \text{Formula (5)}$$

In addition, since the negative ratio between the large block 110 and the small block 112 is fixed, the following Formula (6) holds:

W1/L1 = W2/L2     Formula (6)

Formula (7) below is derived from Formulae (2) and (3), and Formula (8) below is derived from Formulae (4) and (5):

$T2 \times L2 - (W2 \times H - H^2 \times \tan\alpha) = L2 \times T0$     Formula (7)

$T1 \times L1 - (W1 \times H - H^2 \times \tan\alpha) = L1 \times T0$     Formula (8)

If Formula (7) and (8) are transformed, we have the following Formulae (9) and (10):

$T2 = (L2 \times T0 + W2 \times H - H^2 \times \tan\alpha)/L2$     Formula (9)

$T1 = (L1 \times T0 + W1 \times H - H^2 \times \tan\alpha)/L1$     Formula (10)

Since the gage difference $\Delta t$ between the large block 110 and the small block 112 is T2 - T1, the gage difference $\Delta t$ is expressed by the following Formula (11):

$$\begin{aligned}
\Delta t &= T2 - T1 \\
&= (L2 \times T0 + W2 \times H - H^2 \times \tan\alpha)/L2 - (L1 \times T0 + W1 \\
&\quad \times H - H^2 \times \tan\alpha)/L1 \\
&= \{H \times (L1 \times W2 - L2 \times W1) + (L2 - 1) \times H^2 \times \\
&\quad \tan\alpha\}/(L1 \times L2) \qquad\qquad ..... \text{ Formula (11)}
\end{aligned}$$

Here, if L1 $\times$ W2 = L2 $\times$ W1 (a modification of Formula (6)) is substituted for Formula (11), Formula (1) is derived:

$$\begin{aligned}
\Delta t &= (L2 - L1) \times H^2 \times \tan\alpha)/L1 \times L2 \\
&= (1/L1 - 1/L2) \times H^2 \times \tan\alpha \qquad ..... \text{ Formula (1)}
\end{aligned}$$

That is, the greater the circumferential dimension of the block, the greater the top tread gage.

In the case of the tire which is placed in a vulcanizing mold during vulcanization molding, the expansion of the outside diameter is restricted by the mold, since the tread gage at the large block portion becomes large for the above-described reason. Hence, as for the configuration of the inner belt, the large block portion becomes slightly recessed as compared with the small block portion. Accordingly, if the pneumatic tire is inflated with air, the belt in terms of its configuration tends to become completely round, so that the large block portion having a greater thickness projects more than the small block portion.

The uniformity, i.e., the radial force variation (RFV), of the tire is related to the radial runout (RR) of the tire and a force (rigidity) occurring when the tire rotates. The nonuniformity of the tread gage substantially affects the aspect of the radial runout (RR) of the tire (i.e., the more nonuniform the gage is, the greater the runout becomes, and the larger the radial force (RF) of the tire becomes). Namely, the regularity of the irregular pitch has a bearing on the pattern component of the uniformity, i.e., the radial force variation (RFV).

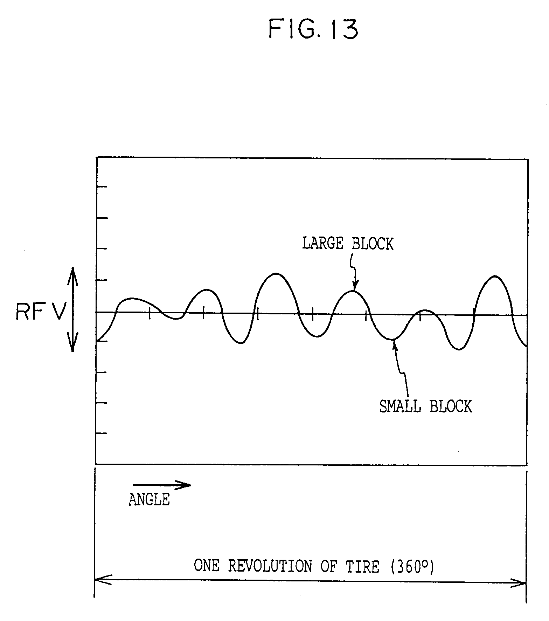

If we look at the waveform of the uniformity (RFV) of a conventional pneumatic tire with sixth harmonic pattern design, there are six peaks (and bottoms) per revolution of the tire, as shown in Fig. 13.

The large and small sizes of the blocks are correlated to the waveform of uniformity (RFV). Thus, it has been experimentally confirmed that the large block portions (portions where the tread gage is large) reached peaks in the waveform, while the small

4

block portions reached bottoms in the waveform.

As a method of alleviating the effect of the runout (RR) of the tire, the pattern component of the uniformity (RFV) can be reduced (i.e., the amplitude of the waveform can be reduced) by arranging the irregular pitches in a irregular manner.

In addition, in the conventional practice, tires having poor uniformity (RFV) are sometimes corrected and improved by shaving off convex portions on the outer periphery of the tire.

However, even if the irregular pitches are arranged in an irregular manner, the pattern component of uniformity (RFV) cannot be completely eliminated, and there still remains the amplitude in the waveform in which the large block portions form peaks and the small block portions reach bottoms.

In addition, with the method of correcting and improving the tire by shaving off the convex portions on the outer periphery of the tire, effects appear in the form of partially defacing the pattern and changing the pattern noise. Further, the tire having a large degree of uniformity (RFV) cannot be corrected completely.

Additionally, even with respect of the force (rigidity) occurring when the tire rotates, the size of the pattern block affects the uniformity. Namely, the compression and elasticity vary according to the size of the pattern block, and the change in the modulus of compressibility and elasticity affects the uniformity. Specifically, if the Young's modulus of rubber is set as $E_0$, the modulus of compressibility and elasticity E to which the block is subjected is expressed by the following Formula (12):

$$E = E_0 (1 + K \times L^2) \qquad \text{Formula (12)}$$

where K is a constant, and L is a circumferential dimension of the block.

Formula (12) is derived as follows.

As an apparent elastic constant E of a block of a regular quadrangular prism when the Young's modulus of rubber is set as $E_0$, the following Formula (13) is described in Chapter 5, Section 6, of "Tire Engineering - - From Introduction to Application (by Hideo Sakai, published by Grand Prix Publication):

$$E = E_0 (1 + 2.19\xi^2) \qquad \text{Formula (13)}$$

where $\xi$ = a pressurized cross-sectional area of a block / total surface area of the block; and 2.19 is a constant which is determined by the configuration of the block and may be substituted by k (for example, the value of k in the case of a block of a circular cylinder is 1.65).

In a case where the block is a rectangular prism, if it is assumed that the transverse dimension of the tire is *a*, the circumferential dimension of the tire is L, and the total surface area is S, the pressurized cross-sectional area becomes $a \times L$, $\xi$ in the case of the block of the rectangular prism becomes $\xi = (a \times L)/S$.

If this $\xi = (a \times L)/S$ is substituted in Formula (13) above, we have

$$E = E_0 \{1 + k(a^2 \times L^2)/S^2\}$$

and if the values of S and *a* are assumed to be fixed, $k \times a^2 / S^2$ can be substituted by K. Hence, Formula (13) can be transformed into the following Formula (14):

$$E = E_0 (1 + K \times L^2) \qquad \text{Formula (14)}$$

It can be seen from Formula (14) above that the apparent modulus of compressibility and elasticity E of the block of the rectangular prism is related to the circumferential length L of the block, and that the greater the circumferential dimension of the block, the greater the apparent modulus of compressibility and elasticity E, i.e., the rigidity of the block of the rectangular prism.

Thus, a component (a pattern factor) is present which produces circumferential nonuniformity in both the tire runout and rigidity due to the variation of the pattern pitch in one revolution of the tire. Consequently, the situation is such that there has been no effective means of solution.

SUMMARY OF THE INVENTION

Accordingly, in view of the above-described circumstances, it is an object of the present invention to provide a method of manufacturing a pneumatic tire which excels in uniformity without shaving an outer periphery of the tire or without deteriorating the pattern noise in a pneumatic tire which is provided with two or more kinds of island-like blocks having mutually different circumferential dimensions and/or two or more kinds of blocks which are each defined by adjacent lug grooves of a plurality of lug grooves arranged in a circumferential row and have mutually different circumferential dimensions.

Another object of the present invention is to provide a pneumatic tire which is manufactured by the above-described method.

In accordance with one aspect of the present invention, there is provided a method of manufacturing a pneumatic tire having at least one of a group of two or more kinds of island-like blocks having mutually different circumferential dimensions and a group of two or more kinds of blocks which are each defined by adjacent lug grooves of a plurality of lug grooves arranged in a circumferential row and have mutually different circumferential dimensions, characterized in that one of a linear rigidity-lowering portion and a rigidity-lowering recess is formed in at least one of each of the island-like blocks whose circumferential dimensions are relatively large among the island-like blocks and each of the blocks whose circumferential dimensions are relatively large among the blocks defined by the adjacent lug grooves.

In accordance with a second aspect of the present invention, the linear rigidity-lowering portion in the above-described method is formed in the pneumatic tire after vulcanization.

In accordance with the above-described method of manufacturing a pneumatic tire, in the island-like blocks having two or more kinds of circumferential pitch lengths and/or tire tread blocks in which lug grooves are arranged in a circumferential row, a linear rigidity-lowering portion is formed in each of the island-like blocks whose circumferential dimensions are relatively large among the island-like blocks and/or each of the blocks whose circumferential dimensions are relatively large among the blocks defined by the adjacent lug grooves. In other words, since the rigidity-lowering portion is formed in the large island-like blocks and/or the large blocks defined by the adjacent lug grooves (these blocks affect the uniformity), it is possible to lower the modulus of compressibility and elasticity of the large block portions, and to reduce the difference in rigidity of the island-like blocks or the blocks between the adjacent lug grooves in the circumferential direction. Consequently, it is possible to manufacture a pneumatic tire excelling in uniformity.

It should be noted that the linear rigidity-lowering portion suffices if it is capable of lowering the rigidity of the block portion, and may be formed by a recess. This rigidity-lowering recess may be provided with a desired cross-sectional configuration and a desired configuration of its opening. However, to prevent the deterioration of the pattern noise, a slit or the like is preferable. In addition, the rigidity-lowering portion may be provided with a configuration of an elongated hole.

In the method of manufacturing a pneumatic tire according to the second aspect of the present invention, since the rigidity-lowering portion is formed in the pneumatic tire after vulcanisation, the rigidity-lowering portion can be formed by selecting portions for which the modulus of compressibility and elasticity (rigidity) needs to be lowered. Accordingly, it is possible to form the rigidity-lowering portions by selecting only the pneumatic tires having poor uniformity, thereby making it possible to improve the uniformity of the pneumatic tires having poor uniformity.

The above and other objects, features and advantages of the present invention will become more apparent from the following detailed description of the invention when read in conjunction with the accompanying drawings.

BRIEF DESCRIPTION OF THE DRAWINGS

Fig. 1 is a plan development of a tread showing a tread pattern of a pneumatic tire in accordance with a first embodiment of the present invention;

Fig. 2 is a layout diagram of plasters of a mold for forming the pneumatic tire;

Fig. 3A is a plan view of a block illustrating the dimension of a slit formed in the transverse direction;

Fig. 3B is a plan view of a block illustrating the dimension of a slit formed in the circumferential direction;

Fig. 3C is a cross-sectional view of a block;

Fig. 4 is a plan view illustrating a block of a pneumatic tire in accordance with another embodiment of the present invention;

Fig. 5 is a plan view illustrating a block of a pneumatic tire in accordance with still another embodiment of the present invention;

Fig. 6 is a plan view illustrating a block of a pneumatic tire in accordance with a further embodiment of the present invention;

Fig. 7 is a plan view illustrating a block of a pneumatic tire in accordance with a still further embodiment of the present invention;

EP 0 612 631 A1

Fig. 8 is a plan view illustrating a block of a pneumatic tire in accordance with a further embodiment of the present invention;

Fig. 9 is a plan view illustrating a block of a pneumatic tire in accordance with a further embodiment of the present invention;

Fig. 10 is a plan view illustrating a block of a pneumatic tire in accordance with a further embodiment of the present invention;

Fig. 11 is a plan view illustrating a block of a pneumatic tire in accordance with a further embodiment of the present invention;

Fig. 12 is a cross-sectional view of a large block and a small block; and

Fig. 13 is a graph illustrating RFV of a conventional pneumatic tire.

DESCRIPTION OF THE PREFERRED EMBODIMENTS

First Embodiment

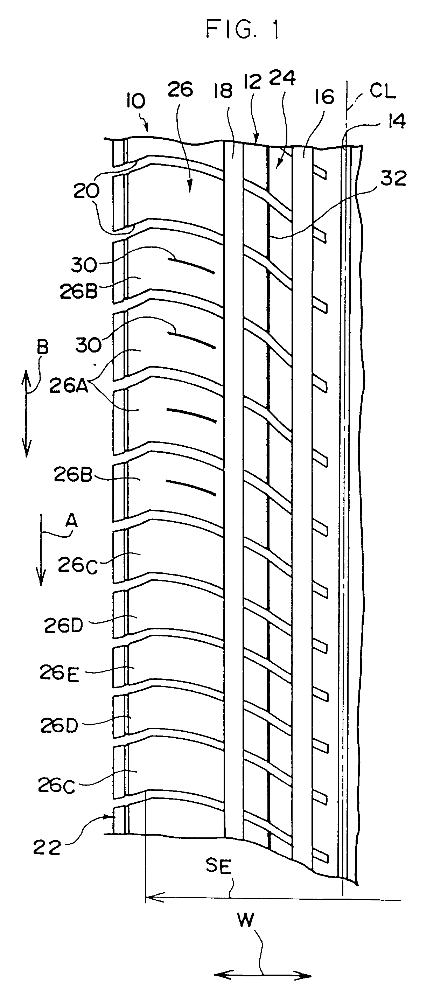

Referring now to Figs. 1 to 3, a description will be given of a first embodiment of the present invention.

Fig. 1 shows a tread pattern (one side of the tire) of a pneumatic tire 10 (tire size: 235/45 ZR 17) in accordance with the first embodiment of the present invention. It should be noted that since the internal structure of this pneumatic tire 10 is similar to the structure of an ordinary radial tire, a description thereof will be omitted.

As shown in Fig. 1, a circumferential groove 14 is provided at a tread center CL serving as an equatorial plane of the tire.

A circumferential groove 16 is provided on either side in the transverse direction of the tire (in the direction of arrow W in Fig. 1) with this circumferential groove 14 as a center. A circumferential groove 18 is provided on each outer side, as viewed in the transverse direction of the tire, of the circumferential groove 16.

A plurality of inclined grooves 20 are formed in the tread 12 on either side of the tread center CL. A longitudinal end of each of these inclined grooves 20 is connected to a shoulder 22, and the other longitudinal end thereof terminates immediately before reaching the circumferential groove 14. Each of the inclined grooves 20 in the ground contacting portion of the tire (in the zone indicated by arrow SE in Fig. 1) is inclined such that the tread center CL side thereof is located more on the treading side in the rotating direction of the tire (on the side in the direction of arrow A in Fig. 1) than the shoulder side thereof. An angle of intersection of the inclined groove 20 with respect to the circumferential direction of the tire is set in such a manner as to become gradually smaller toward the tire tread center CL side. It should be noted that the direction of inclination of the inclined groove 20 is oriented in the opposite direction in a zone which is located outwardly of an end of the ground contacting portion of the tire, as viewed in the transverse direction of the tire. It should be noted that the arrow A also indicates the direction of rotation of the tire.

As a result, a land portion located between the circumferential groove 16 and the circumferential groove 18 is divided into a plurality of first blocks 24 in a circumferential row by means of the inclined grooves 20. Also, a land portion located outwardly of the circumferential groove 18, as viewed in the transverse direction of the tire, is similarly divided into a plurality of second blocks 26 in a circumferential row by means of the inclined grooves 20.

There are five kinds of circumferential pitches of these inclined grooves 20, whereby the first blocks 24 and the second blocks 26 are classified into five kinds of blocks having different circumferential dimensions.

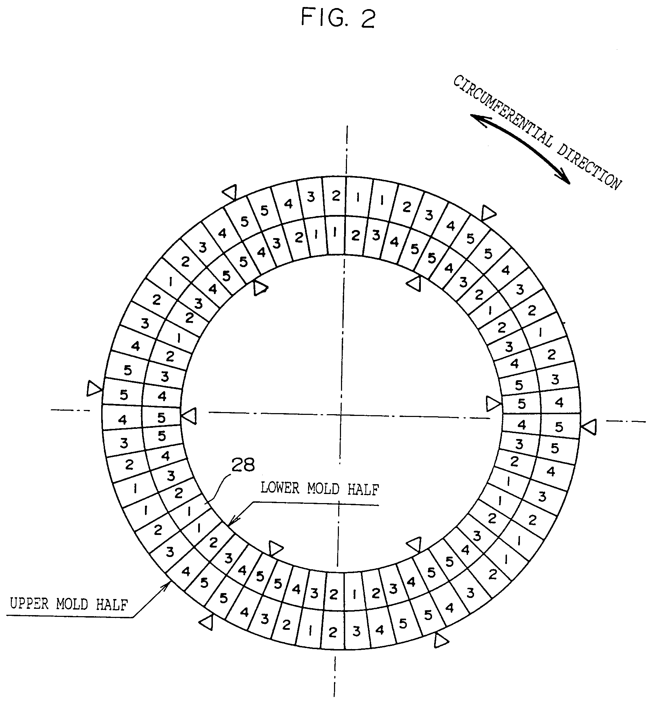

In the pneumatic tire 10 of this embodiment, these first blocks 24 and the second blocks 26 are arranged in the form of sixth harmonic pattern design, and plasters 28 of a mold for forming the first blocks 24 and the second blocks 26 are arranged as shown in Fig. 2. In the drawing, as for numerical values (1 to 5) allotted to the respective plasters 28, large values indicate plasters for molding large blocks having long circumferential dimensions, while small values indicate plasters for molding small blocks having short circumferential dimensions. The inner row shows a lower mold half, while the outer row shows an upper mold half.

It should be noted that the arrangement of the plasters 28 of the upper mold half and the arrangement of the plasters 28 of the lower mold half are offset from each other by predetermined pitches in the circumferential direction, so as to uniformalize the pattern noise generated by the tread 12.

In this embodiment, the circumferential dimension of a second block 26A having the longest circumferential dimension among the second blocks 26 is 35 mm. The circumferential dimension of a second block 26E having the shortest circumferential dimension is 22 mm. The ratio of the circumferential dimension is set to be substantially 7 : 8 : 9 : 10 : 11 in that order starting with the smallest block.

7

In addition, as for the inclined grooves 20, one which is adjacent to the block having a long circumferential dimension is provided with a large groove width, while one which is adjacent to the block having a short circumferential dimension is provided with a small groove width. The inclined grooves 20 are thus arranged such that the negative ratio becomes uniform in the circumferential direction of the tire.

Here, a recess for lowering rigidity is preferably provided at a block portion which produces rigidity and is located at a tire shoulder-side hump that largely influences the relative magnitude of the radial force (RF) of the tire and is subjected to high ground contact pressure. It should be noted that the rigidity-lowering recess serving as a rigidity-lowering portion may be provided at a position other than the tire shoulder-side hump, insofar as the portion of the tread at that position has high ground contact pressure and largely influences the relative magnitude of the radial force. In addition, the rigidity-lowering recess should preferably be formed in such a manner as to not deteriorate the pattern noise.

In this embodiment, a slit 30 serving as the rigidity-lowering recess is formed in central portions, as viewed in the circumferential direction of the tire, of the second block 26A whose circumferential dimension is the longest and a second block 26B whose circumferential dimension is the second longest among the second blocks 26. The slit 30 extends substantially in the radial direction of the tire (in the direction of arrow W) in the circumferentially central portions of the ground contacting portions of the second blocks 26A and 26B.

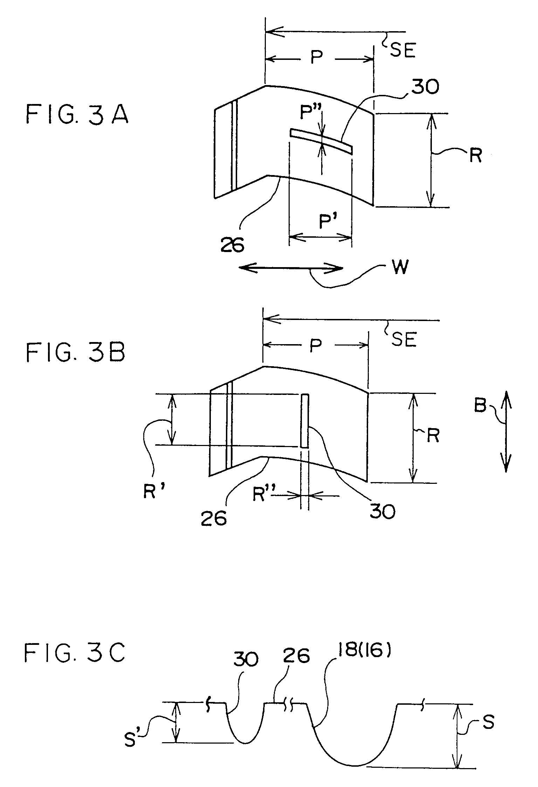

As shown in Fig. 3A, in a case where the longitudinal direction of the slit 30 is set substantially in the transverse direction of the tire (in the direction of arrow W in Fig. 3A), it is preferable to provide a setting such that the slit length P' is 30% to 95% of the transverse length P of the ground contacting portion of the block, the slit width P'' is 0.3% to 15% of the circumferential length R of the ground contacting portion of the block, and the slit depth S' is 25% to 100% of the depth S of each of the adjacent grooves (in this embodiment, the inclined grooves 20) which define the circumferential length of the ground contacting portion of the block. (It should be noted that, as used herein and in the appended claims, the term "transverse" means the transverse direction of the tire.) Meanwhile, as shown in Fig. 3B, in a case where the longitudinal direction of this slit 30 is set in the circumferential direction, it is preferable to provide a setting such that the slit length R' is 30% to 95% of the circumferential length R of the ground contacting portion of the block, the slit width R'' is 0.3% to 15% of the transverse length P of the ground contacting portion of the block, and the slit depth S' is 25% to 100% of the depth S of each of the adjacent grooves (in this embodiment, the inclined grooves 20) which define the circumferential length of the ground contacting portion of the block.

In addition, as shown in Fig. 1, an elongated groove 32 extending in the circumferential direction of the tire is formed in each first block 24.

As a method of forming these slits 30, it is possible to cite, for example, a method in which the slits 30 are formed in the vulcanization-molded tire by a regroover (a commercially available grooving tool). However, the method of forming the slits 30 is not confined to the aforementioned forming method, and it goes without saying that the slits 30 may be formed by other known methods.

Next, a description will be given of the operation of this embodiment.

With the pneumatic tire 10 in accordance with this embodiment, the slits 30 are formed in the shoulder-side large blocks which are subjected to high ground contact pressure, i.e., the second block 26A whose circumferential dimension is the longest and a second block 26B whose circumferential dimension is the second longest among the second blocks 26, as described above. Accordingly, there ceases to be a difference in rigidity between the large blocks and the small blocks, with the result that the uniformity of the pneumatic tire 10 becomes excellent.

Namely, since the widths, lengths, and depths of the slits 30 are determined in correspondence with the sizes of the blocks (in correspondence with the relative rigidity of the blocks) by applying the method of manufacturing a pneumatic tire in accordance with the present invention, it is possible to manufacture a pneumatic tire having excellent uniformity which has hitherto been unobtainable.

In addition, although, in conventional practice, the uniformity is sometimes corrected and improved by shaving off convex portions on the outer periphery of the tire, there is no need to shave off the outer periphery of the tire in the method of manufacturing a pneumatic tire in accordance with the present invention, so that there is no such disadvantages as defacing the pattern and changing the pattern noise. In addition, since the slits 30 are post-processed in correspondence with the rigidity of the blocks, it is possible to select and correct only the tires which have been finished with poor uniformity (RFV).

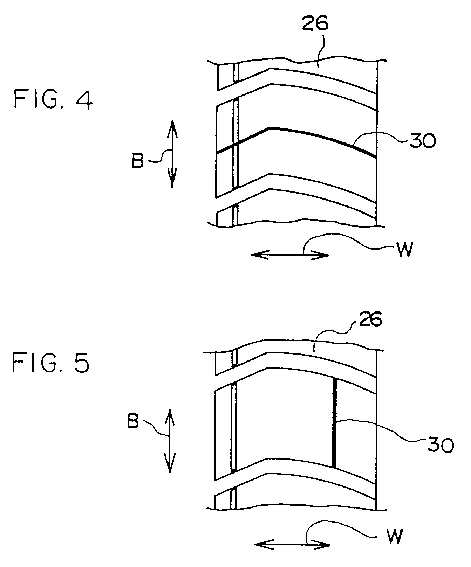

Figs. 4 to 11 show other embodiments of the slit 30.

In the embodiment shown in Fig. 4, the slit 30 having a fixed slit width is formed substantially in the transverse direction (in the direction of arrow W) in such a manner as to divide the second block 26.

In the embodiment shown in Fig. 5, the slit 30 having a fixed slit width is formed substantially in the circumferential direction (in the direction of arrow B) in such a manner as to divide the second block 26.

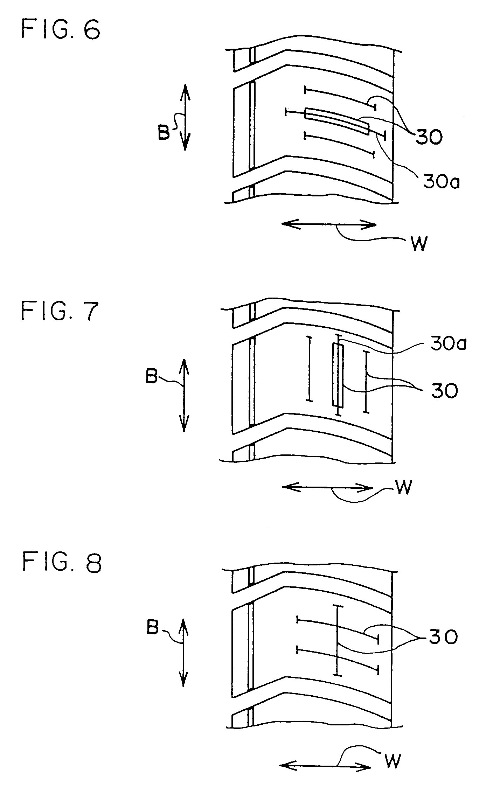

In the embodiment shown in Fig. 6, a plurality of slits 30 having different slit widths and lengths are formed in a portion of the second block 26 where the ground contact pressure is high, the slits 30 being formed in parallel with each other and substantially in the transverse direction (in the direction of arrow W). In addition, a slit 30a having a length and a depth which are larger than those of one slit 30 is superposed on that slit 30.

In the embodiment shown in Fig. 7, a plurality of slits 30 having different slit widths and lengths are formed in parallel with each other and substantially in the circumferential direction (in the direction of arrow B). In addition, the slit 30a having a length and a depth which are larger than those of one slit 30 is superposed on that slit 30.

In the embodiment shown in Fig. 8, a plurality of slits 30 having different slit widths and lengths are formed in the transverse direction and in the circumferential direction.

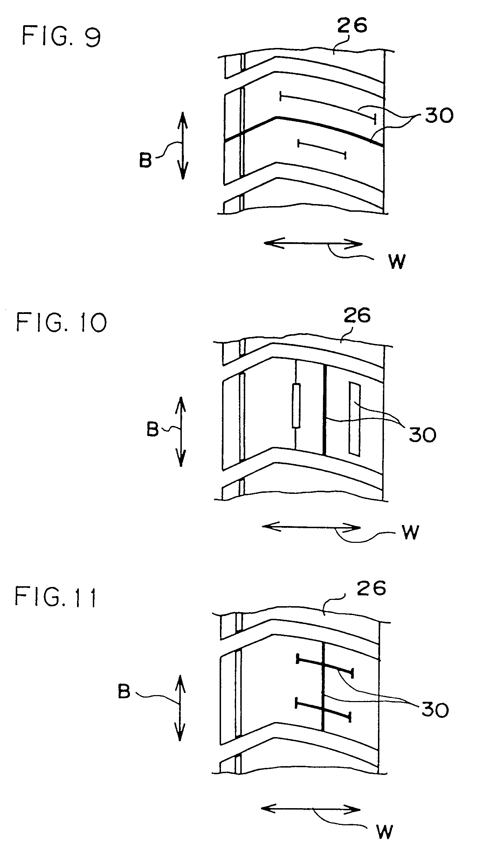

In the embodiment shown in Fig. 9, there are formed at least one slit 30 which divides the second block 26 into a circumferential row of segments and the slits 30 having different slit widths and lengths and formed on both sides of that slit 30 in such a manner as to extend substantially in the transverse direction.

In the embodiment shown in Fig. 10, there are formed at least one slit 30 which divides the second block 26 into a transverse row of segments and the slits 30 having different slit widths and lengths and formed on both sides of that slit 30 in such a manner as to extend in the circumferential direction.

In the embodiment shown in Fig. 11, there are formed at least one slit 30 which divides the second block 26 into a transverse row of segments and two slits 30 intersecting that slit 30 and formed on both sides of that slit 30 in such a manner as to extend in the circumferential direction.

Even if the slits 30 are formed as in the embodiments shown in Figs. 4 to 11, it is possible to lower the rigidity of the large blocks and eliminate the difference in rigidity with respect to the small blocks, so that the uniformity of the pneumatic tire becomes excellent.

Although, in the foregoing embodiments, the slits 30 serving as rigidity-lowering recesses are formed in the completely independent island-like blocks, the present invention is not limited to the same. For instance, the slits may be formed in blocks whose circumferential dimensions are relatively large in a pneumatic tire in which a plurality of lug grooves are arranged in a circumferential row and which are provided with two or more kinds of blocks of mutually different circumferential dimensions between adjacent lug grooves. As a result, it is possible to lower the rigidity of the blocks having relatively large circumferential dimensions and to eliminate the difference in rigidity between the blocks just mentioned and blocks having relatively small circumferential dimensions, thereby rendering the uniformity excellent.

(Experimental Example)

To investigate the advantages of the present invention, slits were formed in the blocks of pneumatic tires, and the effect of the formation of the slits on the uniformity was examined.

In the experiment, pneumatic tires in which the slits were not formed (the pneumatic tires of the type shown in Fig. 1, in which the slits were not formed) were prepared. First, RF of the pneumatic tire in a state in which the slits were not formed was measured. Then, the slits based on the specifications shown in Table 1 were formed in blocks having the longest circumferential dimension and blocks having the second longest circumferential dimension, and an amount of change (unit: kg) in RF due to the formation of the slits was examined for the respective tires.

Here, the tire of Example 1 and the tire of Example 2 in Table 1 were provided with slits whose configurations were the same as that shown in Fig. 1 (various dimensions are listed in Table 1). The tire of Example 3 and the tire of Example 4 were provided with slits whose configurations were the same as that shown in Fig. 4 (various dimensions are also listed in Table 1). The tire of Example 5 and the tire of Example 6 were provided with slits whose configurations were the same as that shown in Fig. 5 (various dimensions are also listed in Table 1).

Table 1

| | Substantially longitudinal direction of slit | Slit length | Ratio of slit depth to depth of inclined groove (%) | Ratio of slit width to length of ground contacting portion of block (%) | Amount of change in RF (kg) |
|---|---|---|---|---|---|
| Tire of Example 1 (Fig. 1) | Transverse direction | 70% of ground contacting portion of block | 100% | 2.5% | 0.5 - 1.1 |
| Tire of Example 2 (Fig. 1) | Transverse direction | 70% of ground contacting portion of block | 100% | 7.5% | 0.9 - 1.1 |
| Tire of Example 3 (Fig. 4) | Transverse direction | overall block | 100% | 2.5% | 1.9 - 2.0 |
| Tire of Example 4 (Fig. 4) | Transverse direction | overall block | 100% | 7.5% | 1.9 - 2.4 |
| Tire of Example 5 (Fig. 5) | Circumferential direction | overall block | 100% | 2.5% | 2.0 - 2.5 |
| Tire of Example 6 (Fig. 5) | Circumferential direction | overall block | 100% | 7.5% | 2.6 - 2.7 |

As shown in Table 1 above, it was possible to change RF by providing a slit in a block portion, and it was experimentally verified that the slit width could be made large, that the slit length could be made long, and that if the direction of the slit was set in the circumferential direction rather than in the transverse direction, the amount of change in RF could be made large.

As described above, in the the method of manufacturing a pneumatic tire in accordance with the first aspect of the present invention, there is provided a method of manufacturing a pneumatic tire having at least one of a group of two or more kinds of island-like blocks having mutually different circumferential dimensions and a group of two or more kinds of blocks which are each defined by adjacent lug grooves of a plurality of lug grooves arranged in a circumferential row and have mutually different circumferential dimensions, wherein a linear rigidity-lowering portion is formed in at least one of each of the island-like blocks whose circumferential dimensions are relatively large among the island-like blocks and each of the blocks whose circumferential dimensions are relatively large among the blocks defined by the adjacent lug grooves. Thus, it is possible to obtain an outstanding advantage in that a pneumatic tire excelling in uniformity can be manufactured without shaving the tire, without changing the pattern noise, and by making the circumferential rigidity between the blocks uniform.

In the method of manufacturing a pneumatic tire in accordance with the second aspect of the present invention, since the rigidity-lowering portion is formed in the pneumatic tire after vulcanization, it is possible to obtain an outstanding advantage in that the uniformity of a pneumatic tire having nonuniformly-finished circumferential rigidity between the blocks can be improved.

## Claims

1. A method of manufacturing a pneumatic tire having at least one of a group of two or more kinds of island-like blocks having mutually different circumferential dimensions and a group of two or more kinds of blocks which are each defined by adjacent lug grooves of a plurality of lug grooves arranged in a circumferential row and have mutually different circumferential dimensions, characterized in that one of a linear rigidity-lowering portion and a rigidity-lowering recess is formed in at least one of each of said island-like blocks whose circumferential dimensions are relatively large among said island-like blocks and each of said blocks whose circumferential dimensions are relatively large among said blocks defined by said adjacent lug grooves.

2. A method of manufacturing a pneumatic tire according to Claim 1, wherein said linear rigidity-lowering portion is formed in said pneumatic tire after vulcanization.

3. A method of manufacturing a pneumatic tire according to Claim 2, wherein said rigidity-lowering portion comprises a slit.

4. A method of manufacturing a pneumatic tire according to Claim 3, wherein said slit extends substantially in a transverse direction of said tire.

5. A method of manufacturing a pneumatic tire according to Claim 4, wherein a length of said slit is 30% to 95% of a transverse length of a ground contacting portion of said block, a width of said slit is 0.3% to 15% of a circumferential length of the ground contacting portion of said block, and a depth of said slit is 25% to 100% of the depth of each of adjacent grooves defining the circumferential length of the ground contacting portion of said block.

6. A method of manufacturing a pneumatic tire according to Claim 3, wherein said slit extends substantially in a circumferential direction of said tire.

7. A method of manufacturing a pneumatic tire according to Claim 6, wherein a length of said slit is 30% to 95% of a circumferential length of a ground contacting portion of said block, a width of said slit is 0.3% to 15% of a transverse length of the ground contacting portion of said block, and a depth of said slit is 25% to 100% of the depth of each of adjacent grooves defining the circumferential length of the ground contacting portion of said block.

8. A method of manufacturing a pneumatic tire according to Claim 2, wherein a plurality of rigidity-lowering portions are formed as said rigidity-lowering portion.

9. A method of manufacturing a pneumatic tire according to Claim 8, wherein said plurality of rigidity-lowering portions are formed substantially parallel to each other.

10. A method of manufacturing a pneumatic tire according to Claim 8, wherein said plurality of rigidity-lowering portions include at least one rigidity-lowering portion extending substantially perpendicular to a remainder of said plurality of rigidity-lowering portions.

**11.** A method of manufacturing a pneumatic tire according to Claim 8, wherein said plurality of rigidity-lowering portions include rigidity-lowering portions whose widths are mutually different.

**12.** A method of manufacturing a pneumatic tire according to Claim 8, wherein said plurality of rigidity-lowering portions include rigidity-lowering portions whose lengths are mutually different.

**13.** A method of manufacturing a pneumatic tire according to Claim 8, wherein said plurality of rigidity-lowering portions include one rigidity-lowering portion and another rigidity-lowering portion which is superposed on said rigidity-lowering portion and has a length larger than that of said rigidity-lowering portion and a depth larger than that of said rigidity-lowering portion.

**14.** A pneumatic tire manufactured by the method according to Claim 1.

## FIG. 1

# FIG. 2

CIRCUMFERENTIAL DIRECTION

28

LOWER MOLD HALF

UPPER MOLD HALF

FIG. 3 A

FIG. 3B

FIG. 3C

FIG. 4

FIG. 5

FIG. 6

FIG. 7

FIG. 8

FIG. 9

FIG. 10

FIG. 11

FIG.12

EP 0 612 631 A1

FIG. 13

RF V

LARGE BLOCK

SMALL BLOCK

ANGLE

ONE REVOLUTION OF TIRE (360°)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PATENT ABSTRACTS OF JAPAN vol. 9, no. 286 (M-429)13 November 1985 & JP-A-60 128 005 (SUMITOMO GOMU K. K. K.) 8 July 1985 * abstract and fig. 1,2 * | 1,14 | B60C11/11 B60C11/12 |
| X | PATENT ABSTRACTS OF JAPAN vol. 14, no. 71 (M-933)(4014) 9 February 1990 & JP-A-01 289 705 (BRIDGESTONE CORP.) 21 November 1989 * abstract and fig. 1-3 * | 1,3,4,14 | |
| A | EP-A-0 192 911 (THE GOODYEAR TIRE & RUBBER COMP.) * page 3, line 8 - page 4, line 1; figures 1,2 * * page 7, line 4 - line 7; figure 3 * | 1,3,4,8, 9,12,14 | |
| A | FR-A-2 659 275 (UNIROYAL ENGLEBERT REIFEN) * the whole document * | 1,3-5,14 | |
| A | DATABASE WPI Week 9033, Derwent Publications Ltd., London, GB; AN 86-69162 & JP-A-61 027 708 (SUMITOMO RUBBER IND. K. K.) 2 July 1986 * abstract and fig. 1 * | 1,3,14 | TECHNICAL FIELDS SEARCHED (Int.Cl.5) B60C |
| P,A | US-A-5 269 357 (L. W. KILLIAN) * column 3, line 55 - column 5, line 52; figure 5 * | 1,3,4,6, 14 | |
| A | US-A-4 649 975 (T. KOGURE ET AL.) * column 2, line 19 - line 59; figure 1 * | 3-5,8,9 | |

-/--

The present search report has been drawn up for all claims

| Place of search | Date of completion of the search | Examiner |
|---|---|---|
| THE HAGUE | 9 June 1994 | Fregosi, A |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | US-A-4 327 792 (S. P. LANDERS)<br>* column 3, line 25 - line 59; figure 1 *<br>----- | 1,14 | |
| | | | **TECHNICAL FIELDS SEARCHED** (Int.Cl.5) |

The present search report has been drawn up for all claims

| Place of search | Date of completion of the search | Examiner |
|---|---|---|
| THE HAGUE | 9 June 1994 | Fregosi, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)